# EUROPEAN PATENT SPECIFICATION

(11) **EP 0 536 367 B1**
(45) Date of publication and mention of the grant of the patent: **23.08.1995**
(21) Application number: 92909021.5
(22) Date of filing: 24.04.1992
(51) Int. Cl.: F16L 3/16, F16L 27/02

(54) **A SUSPENSION DEVICE FOR AN OIL TRANSFERRING PIPE OR HOSE**
HALTERUNGSVORRICHTUNG FÜR ÖLTRANSPORTSCHLAUCH ODER -ROHR
DISPOSITIF DE SUSPENSION DE TUYAU OU DE CONDUITE SOUPLE SERVANT AU TRANSFERT DE PRODUITS PETROLIERS

(30) Priority: 26.04.1991 NO 911676
(43) Date of publication of application: 14.04.1993
(73) Proprietor: PUSNES A/S, 4818 Faervik (NO)
(72) Inventor: KROGSTAD, Ivar, N-4800 Arendal (NO); SETHRE, Käre, N-4800 Arendal (NO)
(74) Representative: Perkins, Sarah
(86) International application number: NO9200077
(87) International publication number: WO9219902

(56) References cited:
- EP-A- 0 166 800
- NO-B- 146 897
- US-A- 3 837 380
- US-A- 4 226 204
- US-A- 4 309 955

## Description

The present invention relates to a suspension for an oil conveying pipe or hose leading to a vessel (see US-A-3837380).

In offshore oil loading it is common to transfer the oil to a vessel through a flexible metal pipe or rubber hoses. The terminations of these are relatively stiff, particularly for flexible metal pipes. Both the vessel and oil pipe are subjected to the forces of the sea, which in addition to variations in the pipe tension also give rise to variations in the fore and aft and athwartship angle between the pipe and its coupling to the vessel.

For oil transfer from the stern of a ship to the bow of another, or from a loading buoy to the bow of a ship, the variations in fore and aft angle are largest, and it has been common to suspend the coupling in the trunk part of a T-shaped pipe, the transverse part having been suspended in bearings on both sides. Here, a pipe swivel has been arranged on one or both sides of the transverse part, depending upon whether one or both of these parts have been carrying oil.

Oil carrying or conveying cardan joints have previously been used in mooring buoys for vessels, ref. US patents 4.226.204, 4.309.955 and Norwegian patent 146897. These solutions have been developed in order to transfer mooring forces, which are much larger than the forces in the oil carrying pipe, and the design of the cardan joints employed reflects this fact. Furthermore, the geometric principles for routing the oil pipes through said cardan joints do not provide advantageous solutions for the suspension of an oil carrying pipe or hose to a vessel, not even if the basis for dimensioning the cardan joints were reduced to the hose tension at hand.

Vertical or approximately vertical oil carrying pipes from the sea floor or submerged buoys normally have a higher tension than those mentioned in the preceding paragraph, and hose tension is one of the most important criteria for determining whether or not the loading must be discontinued due to bad weather.

Measuring systems based on strain gauges and the like for hose tension have been included in the supporting structure for the coupling but it has been difficult to obtain sufficiently good measuring results since the suspension structure has been subjected to other factors than the hose tension. Furthermore, bending moments in the hose have also influenced the measurements. Bending moments in the hose have also caused additional loads in some of the claws in the coupling holding the hose coupler flange.

Therefore, it is very desirable to have freedom for the coupling to perform a pendulum movement in both the fore and aft and athwartship directions. The possibility to measure the hose tension is also of major importance. It has been suggested to use a ball joint suspension but the possible deflection angle may be too small for a ball joint suspension to be acceptable. Hose tension measurements can also be a problem when using ball joint suspensions. The object of the present invention is a suspension providing freedom for the coupling to adjust itself in the pipe pulling direction, such that no bending moment is transferred from the pipe to the coupling. Furthermore, one aims at measuring the pipe tension by means of elements included in the suspension.

This problem has been solved with a suspension device according to claim 1.

The invention will be described below, reference being had to an advantageous embodiment, while concurrently indicating alternative embodiments of some of the components.

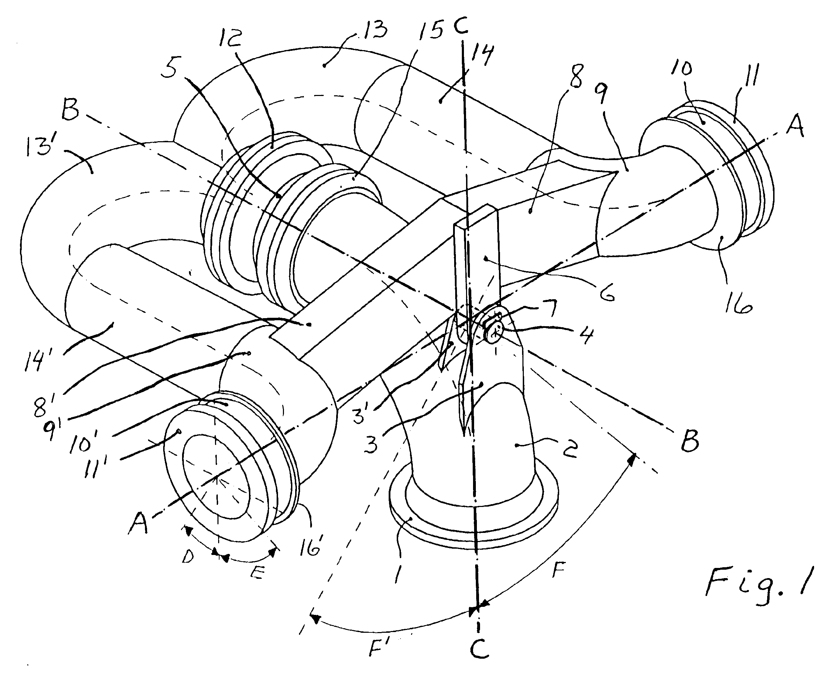

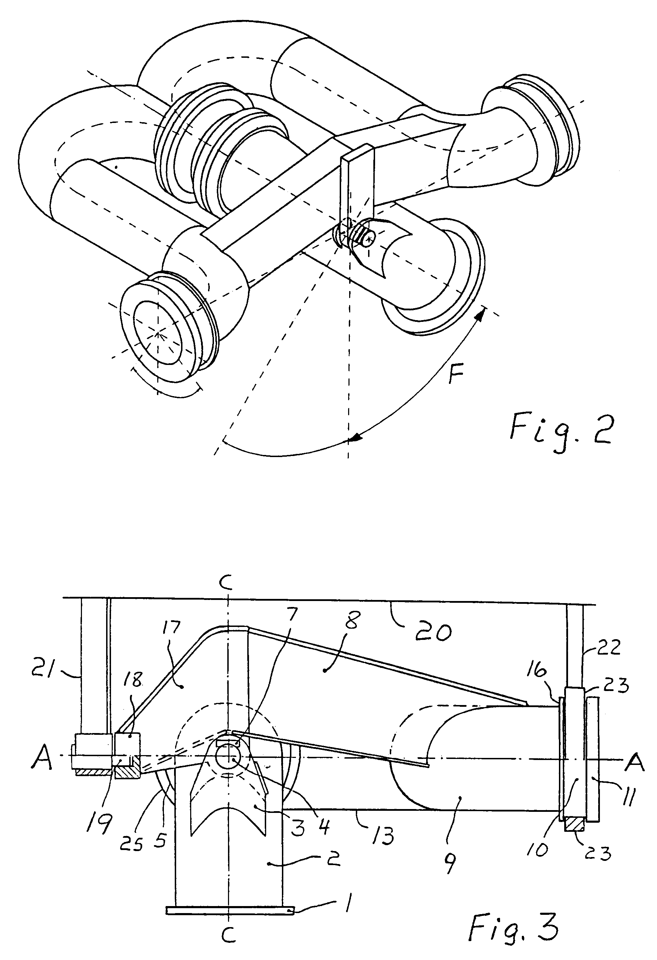

Figure 1 shows a situation where the oil pipe conveying oil to the ship approaches vertically from below, while the same oil pipe in Figure 2 approaches at a lateral angle with respect to the vertical. The three cardan axes are designated A-A (horizontal), B-B (horizontal middle position) and C-C (vertical middle position).

In Figure 1 the pipe conveying oil to the ship may be flanged directly to the flange 1; however, it is desirable to have a closing valve for the oil and a quick coupler for the coupling flange on the oil pipe. Existing systems have a combined closing valve and quick coupler in this place and it is therefore logical to attach this coupling to the flange 1.

The flange 1 is welded to a pipe bend 2, which is suspended in two brackets 3,3′, both being welded to the pipe bend 2. In their upper ends the brackets 3,3′ have bores for a cylindrical load cell 4, the middle portion of which is journalled in a vertical beam 6. The other end of the pipe bend 2 is welded to a flange 15, which is bolted to a pipe swivel 5. The two brackets 3,3′ are bored coaxially with the pipe swivel 5, such that the pipe bend 2 may pivot about the common axis B-B. The load cell 4 is fixed with respect to the bracket 3 by means of a locking key 7.

The vertical beam 6 is welded to a beam structure 8,8′, which in turn is welded to pipe bends 9,9′. These are welded to end pieces 16,16′, having bearing surfaces 10,10′ and end flanges 11,11′. The axis A-A for the bearing surfaces 10,10′ is perpendicular to and coplanar with the axis B-B. Thus, a cardan suspension is formed for the oil carrying pipe or hose so that it cannot transmit bending moments to the suspension on board the vessel. The bearings in which the bearing surfaces 10,10′ rest are not shown. These bearings are attached to the vessel structure.

The oil flow first passes through the pipe bend 2 and pipe swivel 5. After the pipe flange 12 the oil flow is divided in two 180° pipe bends 13,13′ and proceeds through two straight pipes 14,14′ and into the two 90° pipe bends 9,9′. Outside the pipe flanges 11,11′ two pipe swivels (not shown) are connected by means of flanges and the oil passes through these pipe swivels to the pipe arrangement on board the vessel. Alternatively, the bearing surfaces 10,10′ can be the inner rings of pipe swivels. This is a question of dimensioning of the pipe swivels.

The entire hose force or the major part of the hose force will be taken up by the load cell.

The cardan suspension for the oil carrying coupling permits the coupling to swing through the angles D and E about the axis A-A and the angles F,F′ about the axis B-B.

Figure 2 shows a situation where the suspension has pivoted an angle F about the axis B-B.

Figure 3 is seen parallel to the axis B-B and shows an embodiment where the oil flow is not divided after passage of the pipe swivel 5 with the flange 12. The elements 13′,14′,9′,10′,11′,16′ and 8′ from Figure 1 are no longer present. The structure from the beam 8 is extended through an extension 17 to the bearing housing 18, having a pivot centre in the axis A-A. The support structure for the trunnion 19 for the bearing housing 18 is continued through the bracket 21 to the structure 20 of the vessel.

The loads from the bearing housing 23 for the bearing surface 10 are transmitted through the bracket 22 to the structure 20 of the vessel. The lower half of the bearing housings 18, 23 are shown in section.

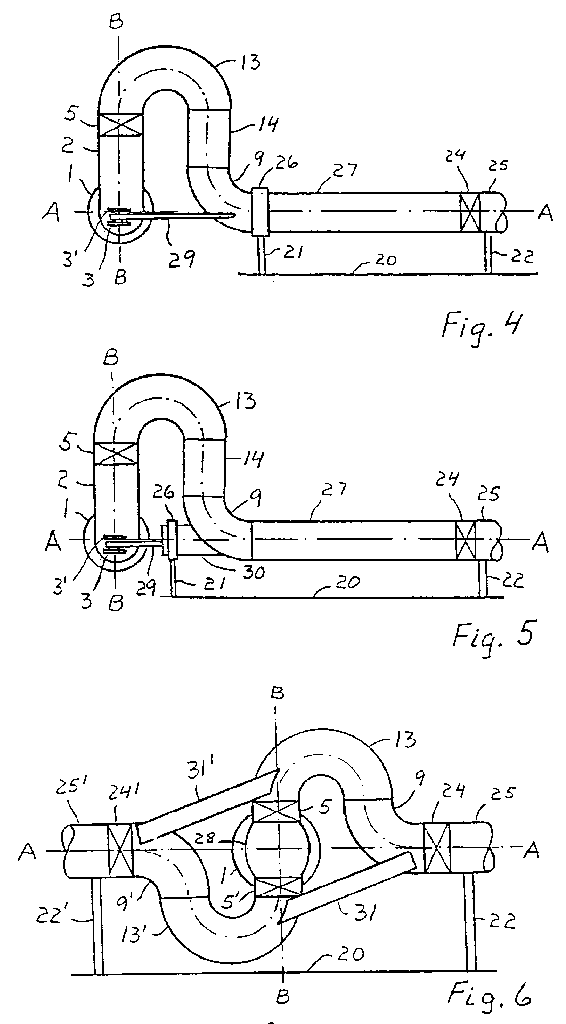

Figures 4, 5 and 6 are all viewed from above and are drawn more schematically than Figures 1-3. Also, the figures are seen parallel to the third cardan axis C-C. Pipe flanges which are not important for the function, are not included, and pipe swivels are indicated by an X, while the proportions correspond to Figures 1 - 3. In Figures 4-6 the following details from Figure 1 can be found: Pipe bends 9 and 13, pipe swivel 5 and coupling flange 1 for coupling to the oil conveying pipe. The bearing surface 10 has been replaced by a pipe swivel 24, and it will be seen that these are connected to the vessel 20 by means of brackets 22 (ref. Figure 3).

Figures 4 and 5 also show these details from Figure 1: The straight pipe 14, the pipe bend 2 and the two small brackets 3,3′ connecting the pipe bend to the load cell (4 not shown in these figures). The beam 29 has the same function as the beams 6,8 in Figure 1.

Figure 4 shows an embodiment where, after the pipe swivel 24 a straight piece of pipe 27 is inserted and having a bearing 26, the housing of which is connected to the vessel 20 by means of the bracket 21 before the oil flow is diverted in the bend 9. The beam structure 29 is an integral part of the pipe bend 9.

Figure 5 shows a similar embodiment but here the bearing 26 is moved closer to the cardan centre and the inner ring of the bearing 26 is part of a pipe 30 which is coaxial with the first cardan axis A-A and is welded to the pipe bend 9. The beam 29 is extended to the pipe 30 and is welded thereto and to the pipe bend 9. The straight piece of pipe 27 is kept in order to increase the distance to the pipe swivel 24 and thereby reduce the stresses thereon.

Figure 6 shows an embodiment that best may be compared to Figure 1. In both these figures the oil flows from the suspended oil pipe through the flange 1 towards the cardan centre. In Figure 1 the oil flow is diverted in the direction of the axis B and is thereupon divided and diverted to two parallel runs in the same direction before the two oil flows are diverted along the axis A-A in opposite directions. In Figure 6 the oil in the T-shaped pipe is diverted and divided into two runs in opposite directions from the cardan centre along the axis B-B. Thereupon both runs are diverted to the axis A-A on either side away from the cardan centre.

The trunk of the T-pipe 28 has the flange 1, and the transverse part is journalled in the two pipe swivels 5,5′. The beam structure 31 connects the pipe bend 9 to the pipe bend 13′ and, similarly, the beam structure 31′ connects the pipe bend 9′ to the pipe bend 13. In this way, all the structural members pivoting about the first cardan axis A-A form a rigid structure. This structure becomes very compact but loses the advantage of the load cell shown in the other figures.

In order to distinguish the invention with respect to the prior art, the patent claims define the oil flow during unloading. As previously noted, for vessels for loading and unloading oil through a pipe it has been common to suspend the pipe in a T-pipe which can pivot about an horizontal axis.

## Claims

1. A suspension device on board a vessel for a pipe or hose, comprising a cardan joint having first and second pivot axes (B-B,A-A) intersecting at right angles, a pipe structure having a plurality of pipe bends (2,9,13) and at least one swivel (5,11) in each of said first and second pivot axes (B-B,A-A), one of said pipe bends (2) having two axes subtending an angle of 90°, one of said axes coinciding with said first pivot axis (B-B) of the cardan joint and the other axis coinciding with the axis of said pipe or hose, said one pipe bend further having a pivotable support (4) for pivoting about said first pivot axis (B-B), characterized in that said one pipe bend (2) is a 90° pipe bend, and in that said pivotable support (4) is located about the intersection of the pivot axes (A-A,B-B) of the cardan joint and is carried by an arrangement (6,8) supported by the structure of said vessel and pivotable about said second pivot axis (A-A).

2. A device according to claim 1,
**characterized in that** the pivotable support comprises a cylindrical trunnion (4) which is journalled in bores in bracket means (3,3′;6) fixed to said one 90° pipe bend (2) and a yoke (8,8′;8,17), respectively, said yoke being supported for pivoting about said second pivot axis (A-A) of the cardan joint.

3. A device according to claim 2,
**characterized in that** the cylindrical trunnion (4) is a load cell of the type that can measure the force acting perpendicularly to its longitudinal axis.

4. A device according to claim 3,
**characterized in that** the load cell is of a type registering the force in one direction only, the load cell being locked with respect to said one 90° pipe bend (2) so that the registering direction of the load cell is parallel to the axis of said pipe or hose.

5. A device according to claim 1,
**characterized in that** said pipe structure comprises two symmetrical runs (9,13,14;9′,13′14′) each having a pipe bend (9;9′) being diverted away from the centre of the cardan joint along said second pivot axis (A-A) thereof.

6. A device according to claim 1,
**characterized in that** said pipe structure (9,13,14;9′,13′,14′) along said second pivot axis (A-A) is attached to end pieces (16;16′) having external bearing surfaces (10;10′) journalled in bearings attached to the structure of said vessel.

7. A device according to claim 6,
**characterized in that** each of said end pieces (16;16′) is forming one part of a pipe swivel, the other part of the pipe swivel being attached to the structure of said vessel.

8. A device according to claim 2,
**characterized in that** said pipe structure (9,13,14) has a single run journalled along said second pivot axis (A-A), and in that a further bearing (18) having a trunnion (19) is connecting the yoke (8,17) to the vessel.

9. A device according to claim 8,
**characterized in that** said further bearing (18) is integral with the yoke (8,17).

10. A device according to claim 8,
**characterized in that** a spherical bearing is incorporated between the further bearing (18) and its trunnion (19).

## Patentansprüche

1. Eine Halterungsvorrichtung bzw. Aufhängung an Bord eines Schiffes für ein Rohr oder einen Schlauch, umfassend ein Kardangelenk mit ersten und zweiten Drehachsen (B-B, A-A), die sich rechtwinklig schneiden, eine Rohrstruktur mit einer Vielheit von Knierohren (2, 9, 13) und mindestens einem Drehteil (5, 11) in jeder der besagten ersten und zweiten Drehachsen (B-B, A-A), eines der besagten Knierohre (2) weist zwei Achsen auf, die sich in einem winkel von 90° gegenüberliegen, wobei eine der besagten Achsen mit der besagten ersten Drehachse (B-B) des Kardangelenks zusammenfällt und die andere Achse mit der Achse des besagten Rohrs oder Schlauchs koinzidiert, besagtes eine Knierohr eine drehbar gelagerte Stütze (4) zum Schwenken um die besagte erste Drehachse (B-B) aufweist, dadurch gekennzeichnet, daß besagtes eine Knierohr (2) ein 90° Knierohr ist, und dadurch, daß sich die besagte drehbar gelagerte Stütze (4) über der Schnittstelle der Drehachsen (A-A, B-B) des Kardangelenks befindet und von einer Anordnung (6, 8) getragen wird, die durch die Struktur des besagten Schiffs gestützt wird und um die besagte zweite Drehachse (A-A) drehbar gelagert ist.

2. Eine Vorrichtung nach Anspruch 1,
dadurch gekennzeichnet, daß die drehbar gelagerte Stütze einen zylindrischen Drehzapfen (4) umfaßt, der in Bohrungen in Trägermitteln (3, 3′; 6) drehbar gelagert ist, die an das besagte eine Knierohr (2) bzw. ein Joch (8, 8′; 8, 17) fixiert sind, wobei das besagte Joch für die Ausführung einer Drehbewegung um die besagte zweite Drehachse (A-A) des Kardangelenks gestützt ist.

3. Eine Vorrichtung nach Anspruch 2,
dadurch gekennzeichnet, daß der zylindrische Drehzapfen (4) eine Kraftmeßdose des Typs ist, der die Kraft messen kann, die senkrecht auf ihre Längsachse wirkt.

4. Eine Vorrichtung nach Anspruch 2,
dadurch gekennzeichnet, daß die Kraftmeßdose eines Typs ist, der die Kraft in nur einer Richtung registriert, indem die Kraftmeßdose in bezug auf das besagte eine 90° Knierohr (2) verriegelt ist, so daß die Registrierrichtung der Kraftmeßdose parallel zur Achse des besagten Rohrs oder des besagten Schlauchs ist.

5. Eine Vorrichtung nach Anspruch 1,
dadurch gekennzeichnet, daß die besagte Rohrstruktur zwei symmetrische Läufe (9, 13, 14; 9′, 13′, 14′) umfaßt, wobei jeder ein Knierohr (9, 9′) aufweist, das vom Zentrum des Kardangelenks weg, entlang dessen besagter zweiten Drehachse (A-A) abgeleitet wird.

6. Eine Vorrichtung nach Anspruch 1,
dadurch gekennzeichnet, daß die besagte Rohrstruktur (9, 13, 14; 9′, 13′, 14′) entlang der besagten zweiten Drehachse (AA) an die Endstücke (16, 16′) montiert ist, die externe Auflageflächen (10, 10′) aufweisen, die in, an der Struktur des Schiffs befestigten, Lagern drehbar gelagert sind.

7. Eine Vorrichtung nach Anspruch 6,
dadurch gekennzeichnet, daß jedes der besagten Endstücke (16, 16′) einen Teil eines Rohrdrehteils bildet, indem der andere Teil des Rohrdrehteils an die Struktur des besagten Schiffs angeschlossen wird.

8. Eine Vorrichtung nach Anspruch 2,
dadurch gekennzeichnet, daß die besagte Rohrstruktur (9, 13, 14) einen einzigen Lauf besitzt, der drehbar entlang der besagten zweiten Drehachse (A-A) gelagert ist und dadurch, daß ein weiteres Lager (18) mit einem Drehzapfen (19) das Joch (8, 17) mit dem Schiff verbindet.

9. Eine Vorrichtung nach Anspruch 8,
dadurch gekennzeichnet, daß das besagte weitere Lager (18) mit dem Joch (8, 17) aus einem Stück ist.

10. Eine Vorrichtung nach Anspruch 8,
dadurch gekennzeichnet, daß ein Kugellager zwischen dem weiteren Lager (18) und seinem Drehzapfen (19) eingebaut ist.

## Revendications

1. Un dispositif de suspension à bord d'un navire pour tube ou tuyau, comportant un joint de Cardan avec un premier et un deuxième axes de pivotement (B-B, A-A) se coupant à angles droits, une structure de tuyauterie dotée de plusieurs coudes de tubes (2,9,13) et au moins une articulation (5,11) dans chacun des premier et deuxième axes de pivotement (B-B, A-A), l'un des coudes de tuyaux mentionnés (2) ayant deux axes sous-tendant un angle de 90°, l'un de ces axes coincidant avec le premier axe de pivotement (B-B) du joint de Cardan, et l'autre axe co·ncidant avec l'axe du tube ou tuyau, l'un de ces coudes de tubes ayant, en outre, un support pivotant (4) pouvant tourner autour du premier axe de pivotement (B-B) mentionné qui se caractérise par le fait, d'une part, que l'un de ces coudes de tube (2) est un coude de tube à 90° et, d'autre part, que le support pivotant (4) est situé autour de l'intersection des axes de pivotement (A-A, B-B) du joint de Cardan et porté par un agencement (6,8) soutenu par la structure du navire et pivotant sur le deuxième axe de pivotement (A-A).

2. Un dispositif conforme à la revendication 1,
qui se caractérise par le fait que le support pivotant comporte un tourillon cylindrique (4) lequel est installé pour tourner dans des alésages de pièces de support (3,3′;6) fixées au coude de tuyau à 90° (2) et à un joug (8,8′;8,17) respectivement, ce joug étant soutenu pour tourner sur le deuxième axe de pivotement (A-A) du joint de Cardan.

3. Un dispositif conforme à la revendication 2,
qui se caractérise par le fait que le tourillon cylindrique (4) est un dynamomètre d'un type capable de mesurer la force agissant perpendiculairement à son axe longitudinal.

4. Un dispositif conforme à la revendication 3,
qui se caractérise par le fait que le dynamomètre est d'un type enregistrant la force dans un sens seulement, le dynamomètre étant bloqué par rapport à l'un des coudes de tube à 90° (2) pour que le sens enregistré par le dynamomètre soit parallèle à l'axe du tube ou tuyau.

5. Un dispositif conforme à la revendication 1,
qui se caractérise par le fait que la structure de tuyauterie comporte deux longueurs symétriques (9,13,14;9′,13′,14′), chacune possédant un coude de tube (9;9') dévié et éloigné du centre du joint de Cardan sur son deuxième axe de pivotement (A-A).

6. Un dispositif conforme à la revendication 1,
qui se caractérise par le fait que la structure de tuyauterie (9,13,14;9′,13′,14′) sur le deuxième axe de pivotement (A-A) est fixée à des pièces d'extrémité (16;16′) dont les surfaces de portée externes (10;10′) sont installées pour tourner dans les paliers fixés à la structure du navire.

7. Un dispositif conforme à la revendication 6,
qui se caractérise par le fait que chaque pièce d'extrémité (16;16′) forme une partie d'une articulation de tube, l'autre partie de l'articulation de tube étant fixée à la structure du navire.

8. Un dispositif conforme à la revendication 2,
qui se caractérise par le fait, d'une part, que la structure de tuyauterie (9,13,14) possède une seule longueur installée pour tourner sur le deuxième axe de pivotement (A-A) et, d'autre part, qu'un palier complémentaire (18) possédant un tourillon (19) relie le joug (8,17) au navire.

9. Un dispositif conforme à la revendication 8,
qui se caractérise par le fait qu'un palier complémentaire (18) fait partie intégrante du joug (8,17).

10. Un dispositif conforme à la revendication 8,
qui se caractérise par le fait qu'un palier sphérique est incorporé entre le palier complémentaire (18) et son tourillon (19).
